(19) Europäisches Patentamt
European Patent Office
Office européen des brevets

(11) EP 4 495 292 B1

# (12) EUROPEAN PATENT SPECIFICATION

(45) Date of publication and mention of the grant of the patent:
**03.12.2025 Bulletin 2025/49**

(21) Application number: **24174106.5**

(22) Date of filing: **03.05.2024**

(51) International Patent Classification (IPC):
***C25B 3/26*** (2021.01) ***C25B 11/091*** (2021.01)
***C25B 11/065*** (2021.01) ***B01J 23/745*** (2006.01)
***B01J 27/24*** (2006.01) ***B01J 35/33*** (2024.01)

(52) Cooperative Patent Classification (CPC):
**C25B 3/26; B01J 23/745; B01J 27/24; B01J 35/33; C25B 11/065; C25B 11/091**

## (54) ELECTROCHEMICAL HYBRID CATALYST CONTAINING NICKEL-IRON DIATOMIC METALS AND CARBON DIOXIDE CONVERSION SYSTEM USING THE SAME

ELEKTROCHEMISCHER HYBRIDKATALYSATOR MIT DIATOMAREN NICKEL-EISEN-METALLEN UND KOHLENDIOXIDUMWANDLUNGSSYSTEM DAMIT

CATALYSEUR HYBRIDE ÉLECTROCHIMIQUE CONTENANT DES MÉTAUX DIATOMIQUES NICKEL-FER ET SYSTÈME DE CONVERSION DE DIOXYDE DE CARBONE L'UTILISANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.07.2023 KR 20230093474**

(43) Date of publication of application:
**22.01.2025 Bulletin 2025/04**

(73) Proprietor: **SK Innovation Co., Ltd.**
**Seoul 03188 (KR)**

(72) Inventors:
- **HAN, Hyun Su**
  **34124 Daejeon (KR)**
- **IM, Ju Hwan**
  **34124 Daejeon (KR)**
- **LEE, Seung Ok**
  **34124 Daejeon (KR)**
- **LEE, Tae Kyoung**
  **34124 Daejeon (KR)**
- **KIM, Soo Bean**
  **34124 Daejeon (KR)**
- **SEOK, Tae Hong**
  **34124 Daejeon (KR)**
- **LIM, Yun Ji**
  **34124 Daejeon (KR)**

(74) Representative: **Lorenz Seidler Gossel Part. mbB**
**Widenmayerstr. 23**
**80538 München (DE)**

(56) References cited:
- **JIAO LONG ET AL: "Non-Bonding Interaction of Neighboring Fe and Ni Single-Atom Pairs on MOF-Derived N-Doped Carbon for Enhanced CO 2 Electroreduction", JOURNAL OF THE AMERICAN CHEMICAL SOCIETY, vol. 143, no. 46, 15 November 2021 (2021-11-15), pages 19417 - 19424, XP093224472, ISSN: 0002-7863, DOI: 10.1021/jacs.1c08050**
- **HUINIAN ZHANG ET AL: "A Graphene-Supported Single-Atom FeN5 Catalytic Site for Efficient Electrochemical CO2 Reduction", ANGEWANDTE CHEMIE INTERNATIONAL EDITION, VERLAG CHEMIE, HOBOKEN, USA, vol. 58, no. 42, 9 September 2019 (2019-09-09), pages 14871 - 14876, XP072098466, ISSN: 1433-7851, DOI: 10.1002/ANIE.201906079**
- **HAN HYUNSU ET AL: "Large-scale CO2-to-CO electroconversion on highly efficient diatomic catalysts", CHEMICAL ENGENEERING JOURNAL, vol. 479, 1 January 2024 (2024-01-01), AMSTERDAM, NL, pages 147603, XP093224505, ISSN: 1385-8947, DOI: 10.1016/j.cej.2023.147603**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 495 292 B1

## Description

BACKGROUND OF THE INVENTION

Field of the Invention

The present invention relates to an electrochemical hybrid catalyst containing nickel-iron diatomic metals and a carbon dioxide conversion system using the same. More particularly, the present invention relates to an electrochemical hybrid catalyst that has a configuration in which two species of single atomic metals, that is, nickel (Ni) and iron (Fe), each bonded to (coordinated with) nitrogen in a nitrogen-doped carbon nanostructure, are adjacent to each other and are indirectly linked via nitrogen to form a catalyst site or an active site and thus exhibits high carbon monoxide selectivity and current density at a low overpotential during reduction reaction for converting carbon dioxide into carbon monoxide, and a carbon dioxide conversion system using the same.

Description of the Related Art

Since the Industrial Revolution, fossil fuels have been consumed in large quantities and the world population has increased, and the amount of carbon dioxide ($CO_2$) is also increasing exponentially. Carbon dioxide is emitted into the atmosphere due to human industrial and economic activities, and is supplied to the atmosphere in addition to the existing carbon cycle, thus increasing the greenhouse effect. This is emerging as a fatal threat to the ecosystem because it raises the temperature of the surface or lower atmosphere, causing global warming and climate change.

In response thereto, greenhouse gas reduction plans are being announced in countries around the world, and the burden related to carbon dioxide emission reduction is increasing throughout the industry. In the past, research has been mainly focused on the capture and storage of carbon dioxide. However, in an attempt to realistically contribute to the goal of "reduction of greenhouse gas emissions by 37% compared to BAU by 2030" specified in the 2015 Paris Agreement on Climate Change, a method for recycling carbon dioxide, that is, a technology for converting carbon dioxide into beneficial substances such as high value-added fuels or platform compounds, has been intensively researched.

To date, carbon dioxide conversion methods such as electrochemical conversion, photochemical conversion, chemical conversion using catalysts, biological conversion, and the like have been proposed. Thereamong, electrochemical conversion is (i) operable under normal temperature/pressure conditions, (ii) has a simple system and can be modulated, (iii) can increase the net reduction rate of carbon dioxide when using renewable energy, and (iv) is useful as a renewable energy storage method by conversion to high value-added chemicals. In particular, the carbon dioxide reduction reaction ($CO_2$RR) of reacting thermodynamically stable carbon dioxide with water is environmentally friendly while minimizing the emission of pollutants because it can produce various organic compounds. As such, high value-added chemicals and fuels produced by the carbon dioxide reduction reaction are promising solutions for commercial-scale carbon cycles, energy crises, and environmental pollution.

Nevertheless, limitations of previously researched electrochemical carbon dioxide reduction processes have been pointed out due to low reaction rates, distribution of various products (decreased selectivity), occurrence of competing reactions such as hydrogen generation reaction (HER), and the like. In order to overcome these technical barriers, an electrochemical catalyst for carbon dioxide reduction reaction having higher catalytic activity and efficiency is required. Previous studies have proposed various electrochemical carbon dioxide conversion catalysts. As an example, metal-free catalysts, metal-based catalysts, and metal-organic framework (MOF)-based catalysts that provide high activity and selectivity are known. In particular, it has been reported that noble metal catalysts, such as gold (Au) and silver (Ag), among metal catalysts, yield excellent results in terms of current density and Faraday efficiency for carbon monoxide.

However, catalysts, in which metals are dispersed (or decorated) in a single atom size, that is, single atom catalysts (SACs), have recently attracted a great deal of attention since noble metal catalysts are disadvantageous in terms of commercial application due to the use of expensive precious metals. Single atom catalysts can reduce the size of metal active sites to atomic levels below the nanoscale to maximize carbon dioxide conversion activity and replace expensive noble metals with inexpensive transition metals. In particular, single atom catalysts have an extremely simplified and ideal structure, thus being advantageously suitable to perform related research by simulating theoretical results obtained through computational science (J. Phys. Chem. C, 2013, 117, 9187-9195; Angew. Chem. Int. Ed., 2015, 54, 10758-10762, etc.). However, in single-atom-sized metal catalysts, atoms tend to aggregate to form particles. For this reason, it is difficult to commercially synthesize stable single atom catalysts and synthesis thereof involves a high-cost and complicated process, which is an obstacle to use in various fields. In particular, the structural simplicity of the single atom active site limits an increase in catalytic efficiency of the carbon dioxide reduction process involving multi-step proton-electron transfer.

In an attempt to solve these problems, carbon-based metal-nitrogen (M-N) catalysts providing single atom transition metal active sites have been developed, which have low cost, a controllable structure, high activity and stability,

and can promote formation of active sites and catalytic mechanisms through excellent coordination environment.

Currently, it is known that nickel (Ni) single atom catalysts can effectively replace noble metal catalysts because they exhibit high activity and selectivity for carbon monoxide in the carbon dioxide conversion reaction. However, there is a need for a large amount of energy to achieve high Faraday efficiency (high overpotential).

Therefore, there is a need for methods for adjusting the electronic structure of single atom catalysts to improve the carbon dioxide conversion performance of conventional single atom catalysts.

Long, J. , et al., J. Am. Chem. Soc. (2021), 143(46), pp. 19417-19424 disclose supported single-atom catalysts comprising neighboring Ni and Fe single atom pairs for $CO_2$ electroreduction.

SUMMARY OF THE INVENTION

The present invention aims to provide a transition metal single atom catalyst capable of improving price competitiveness while providing excellent carbon dioxide conversion activity compared to previous commercial noble metal catalysts (e.g., Ag/C) and an electrochemical electrode including the same.

The present invention further aims to provide a carbon dioxide conversion system capable of effectively removing carbon dioxide from flue gas discharged from power plants, steel mills, and the like using a catalyst that has higher carbon dioxide conversion activity and higher selectivity for carbon monoxide than the prior art.

Against this background, the invention proposes a diatomic metal catalyst for electrochemically converting carbon dioxide, the catalyst comprising:

(i) a support comprising a nitrogen-doped carbon nanostructure, and
(ii) nickel (Ni) and iron (Fe) in the form of single atoms each decorated on the support,

wherein the nickel (Ni) is bonded to each of four surrounding nitrogen atoms, while the iron (Fe) is bonded to each of five surrounding nitrogen atoms to form a $Ni-N_4$ site and a $Fe-N_5$ site, respectively, and
Ni at the $Ni-N_4$ site and Fe at the $Fe-N_5$ site are adjacent to each other and are indirectly linked to each other via nitrogen.

The invention further proposes a method of preparing such catalyst, the method comprising:

a) attaching nitrogen-containing monomer to carbon and performing in-situ polymerization using an iron-based oxidizing agent to form an iron (Fe)-incorporated polymer/carbon composite,
b) attaching nickel precursor to the iron (Fe)-incorporated polymer/carbon composite to form a NiFe-polymer/carbon composite, and
c) subjecting the NiFe-polymer/carbon composite to pyrolysis to decorate nickel (Ni) and iron (Fe) as single atoms on a support comprising a nitrogen-doped carbon (N-C) nanostructure,

wherein the nickel (Ni) is bonded to each of four surrounding nitrogen atoms, while the iron (Fe) is bonded to each of five surrounding nitrogen atoms to form a $Ni-N_4$ site and an $Fe-N_5$ site, respectively, and
Ni at the $Ni-N_4$ site and Fe at the $Fe-N_5$ site are adjacent to each other and are indirectly linked to each other via nitrogen.

Yet further, the invention relates to an electrode for the reduction of carbon dioxide, which comprises:

an electrode substrate, and
a diatomic metal catalyst according to the invention loaded on the electrode substrate.

In an exemplary embodiment, an amount of the diatomic metal catalyst loaded in the electrode may be determined within a range of 0.2 to 5 $mg/cm^2$.

Yet further, the invention relates to a carbon dioxide reduction system, which comprises:

an anode and a cathode as electrochemical electrodes electrically connected to an external power source; and
an aqueous electrolyte filled between the anode and the cathode,
wherein the system is configured such that, upon application of a voltage from the external power source, oxygen is generated at the anode and carbon monoxide is generated at the cathode, and
wherein the cathode comprises a diatomic metal catalyst according to the invention loaded on an electrode substrate.

## BRIEF DESCRIPTION OF THE DRAWINGS

The above and other objects, features, and other advantages of the present invention will be more clearly understood from the following detailed description taken in conjunction with the accompanying drawings, in which:

FIG. 1 is a schematic diagram illustrating a process of preparing a nickel (Ni)-iron (Fe) diatomic metal catalyst (NiFe-DAC) according to an exemplary embodiment;
FIG. 2 is a high-angle annular dark field scanning transmission electron microscopy (HAADF-STEM)/element mapping image of the nickel (Ni)-iron (Fe) diatomic metal catalyst (NiFe-DAC) according to Example;
FIG. 3 shows X-ray diffraction (XRD) patterns of the nickel (Ni)-iron (Fe) diatomic metal catalyst (NiFe-DAC) according to Example and the Fe monoatomic (single atomic) metal catalyst (Fe-SAC) according to Comparative Example;
FIG. 4 is a graph showing results of X-ray photoelectron spectroscopy (XPS) analysis of the nickel (Ni)-iron (Fe) diatomic metal catalyst (NiFe-DAC) according to Example and the Fe monoatomic metal catalyst (Fe-SAC) according to Comparative Example;
FIG. 5A is a graph showing results of extended X-ray absorption fine structure (EXAFS) analysis of the nickel (Ni)-iron (Fe) diatomic metal catalyst (NiFe-DAC) according to Example and the Fe monoatomic metal catalyst (Fe-SAC) according to Comparative Example;
FIG. 5B is a graph showing results of extended X-ray absorption fine structure (EXAFS) analysis of the nickel (Ni)-iron (Fe) diatomic metal catalyst (NiFe-DAC, direct bond) according to Comparative Example;
FIG. 6 is a graph showing the results of Brunauer-Emmett-Teller (BET) analysis of the catalyst (NiFe-DAC) according to Example and the catalyst (Fe-SAC) according to Comparative Example; and
FIG. 7 is a graph showing Faradaic efficiency for carbon monoxide production of the nickel (Ni)-iron (Fe) diatomic metal catalyst (NiFe-DAC) according to Example, and the Fe monoatomic metal catalyst (Fe-SAC), a commercial Ag/C catalyst, and the nickel (Ni)-Iron (Fe) diatomic metal catalyst (direct bonding; NiFe-DAC (Direct) according to Comparative Example.

## DETAILED DESCRIPTION OF THE INVENTION

As used herein, the term "catalyst" refers to a component that increases the rate of an electrochemical reaction and participates in the electrochemical reaction while not being consumed by the reaction. In a narrow sense, the catalyst may refer to a component that facilitates a reaction mechanism that provides or accepts electrons in the carbon monoxide evolution reaction and/or oxygen evolution reaction by carbon dioxide reduction reaction.

As used herein, the term "electrochemical catalyst" refers to a catalyst that participates in an electrochemical reaction and is, typically, a catalyst acting on an electrode surface or an electrode surface itself.

As used herein, the term "electrochemical carbon dioxide conversion reaction" generally refers to a reaction in which carbon dioxide is reduced to useful compounds based on the potential difference generated between two electrodes (cathode and anode) to induce movement of electrons, for example, a reaction in which carbon dioxide is reduced to carbon monoxide.

As used herein, the term "nanostructure" refers to any nanoscale object with a shape such as nanopillar, nanorod, nano-wall, nanowire, nano-web, or the like, having a feature or texture having a nanoscale dimension or size (e.g., 0.1 to 1,000 nm; in an embodiment, it may be 1 to 100 nm).

As used herein, the term "single-atomic form" refers to a form in which an active metal attached or fixed to a support is present as an isolated or individual atom.

As used herein, the term "indirect bonding" refers to a state in which two atoms or ions are linked via another atom or group rather than direct bonding therebetween. Conversely, the term "direct bonding" refers to a state in which two atoms or ions are directly linked to each other (e.g., metal-metal bonding).

As used herein, the term "electrode" refers to a conductive structure that is electrically connected to an external power source in a carbon dioxide reduction reaction ($CO_2RR$) system and is typically physically separated from the external power source. The term "electrode" also includes a cathode at which reduction occurs or an anode at which oxidation occurs, when a voltage is applied from an external power source.

As used herein, the term "catalyst electrode" refers to a current collector on which a catalyst is loaded, whereby catalyst is absorbed thereon or is electrically connected thereto in a discrete or separate manner. In an embodiment, the catalyst electrode may be associated with the current collector through a change in oxidation state and/or dynamic equilibrium with an aqueous medium when the catalyst is exposed to the aqueous medium (e.g., an aqueous electrolyte solution).

As used herein, the term "electrochemical electrode" refers to an electrode structure in which a catalyst component facilitating carbon dioxide reduction reaction is mixed with or attached to a substrate for an electrode (cathode and/or anode) .

As used herein, the term "overpotential" refers to a potential in excess of the thermodynamic requirement for reduction or oxidation to obtain the desired catalytic activity. Here, "overpotential" may mean the difference between the voltage to be applied to the electrode in order to induce carbon dioxide reduction reaction and the thermodynamic voltage required for the carbon dioxide reduction reaction.

As used herein, the term "pyrolysis" refers to a chemical process in which one substance is converted into another substance by heat in the presence or absence of a gas. Typically, gases and/or liquids may be produced from organic substances through pyrolysis and at this time, solid residues with an increased carbon content may be produced. Pyrolysis may occur in an inert gas (e.g., nitrogen or argon) or reactive gas (e.g., ammonia or hydrogen) atmosphere.

## Electrochemical catalyst for carbon dioxide conversion

The electrochemical catalyst according to the present invention may be used as a catalyst for a cathode in a carbon dioxide reduction system that includes an anode (or oxidation electrode) or a cathode (reduction electrode), both of which are electrically connected to an external power source, and an electrolyte (for example, an aqueous electrolyte) is filled or loaded between the anode and the cathode. This electrochemical carbon dioxide conversion reaction is a process of electrolyzing carbon dioxide along with an aqueous medium to obtain a desired product, where the reduction of carbon dioxide occurs at the cathode by electrical energy supplied from the external power source as depicted in Reaction Formula 1 below, and the oxygen evolution reaction occurs at the anode via oxidation as depicted in Reaction Formula 2 below.

[Reaction Scheme 1] $CO_2 + H_2O + 2e^- \rightarrow CO + 2OH^-$

[Reaction Scheme 2] $2OH^- \rightarrow 1/2O_2 + H_2O + 2e^-$

In particular, the detailed mechanism of the carbon dioxide reduction reaction at the cathode may be depicted in Reaction Scheme 3 below.

[Reaction Scheme 3]

$$CO_2 + e^- \xrightarrow{CO_2\ \text{Adsorption}} {}^*CO_2^-$$

$$^*CO_2^- + H^+ \xrightarrow{CO_2\ \text{Activation/Intermediate Formation}} {}^*COOH$$

$$^*COOH + H^+ + e^- \longrightarrow {}^*CO \xrightarrow{^*CO\ \text{Desorption}} CO$$

According to the present embodiment, a catalyst in which two species of metals, that is, nickel (Ni) and iron (Fe), are each loaded (decorated or supported) in the form of single atoms in a nitrogen-doped carbon nanostructure is provided as an electrochemical catalyst that facilitates the carbon dioxide reduction reaction ($CO_2RR$) occurring at the cathode. In this case, the catalyst is a hybrid catalyst in which nickel (Ni) and iron (Fe) simultaneously exist as single atoms, and nickel (Ni) and iron (Fe) are adjacent to each other on an atomic (single atom) level. As a result, both adsorption and activation of carbon dioxide and efficient desorption of carbon monoxide can be effectively performed in the carbon dioxide conversion mechanism depicted by Reaction Scheme 3.

In addition, nickel (Ni) and iron (Fe) interact with each other while being indirectly linked via nitrogen rather than being directly bonded to each other. It should be noted that such a catalyst can realize high carbon dioxide conversion and carbon monoxide selectivity even at low overpotential, compared to single-atom catalysts (e.g., Fe-monoatomic catalysts and Ni-monoatomic catalysts) as well as a diatomic catalyst (DAC) in which nickel (Ni) and iron (Fe) are directly bonded to each other.

According to one embodiment, the diatomic metal catalyst has a structure in which nickel (Ni) and iron (Fe) are each dispersed or decorated in the form of single atoms on a support comprising a nitrogen-doped carbon nanostructure.

In one embodiment, the diatomic metal catalyst may have porosity. Illustratively, the diatomic metal catalyst may have microporosity (for example, 2 nm or less). At this time, the specific surface area (BET) of the catalyst may be determined, for example, within the range of 100 to 300 $m^2/g$, for example 120 to 250 $m^2/g$, and for example 130 to 180 $m^2/g$. In addition, the pore volume may be determined within the range of, for example 0.1 to 0.5 $cm^3/g$, for example 0.15 to 0.4 $cm^3/g$, and for example 0.2 to 0.3 $cm^3/g$. The numerical range may be provided for an illustrative purpose.

According to an embodiment, the content of nitrogen in the nitrogen-doped carbon nanostructure usable as a support may be, for example, 1 to 12 atomic%, for example 2 to 10 atomic%, for example 4 to 8 atomic%. In this regard, the

doping amount of nitrogen may affect the degree of bonding with metal atoms, and may be advantageously appropriately adjusted within the range defined above.

According to a particular embodiment, two species of transition metals, namely, nickel (Ni) and iron (Fe), in the catalyst for converting carbon dioxide, are decorated in a monatomic or atomic-scaled isolated form to form an active site during the carbon dioxide conversion reaction and to form the electronic structure of the active site suitable for the carbon dioxide conversion reaction through interaction.

Without willing to be bound by a particular theory, the reason for adopting the combination or pair of nickel and iron as diatomic metals (transition metals) in the catalyst for carbon dioxide conversion may be explained as follows: nickel is advantageous for carbon monoxide desorption, and iron is advantageous for the activation (formation of *COOH reaction intermediate), which is the initial stage of carbon dioxide conversion. In this way, by choosing the active metals in the catalyst as a combination or pair of nickel and iron, the electronic structure can be changed through effective electron transfer between nickel and iron. As a result, it is possible to ultimately maximize catalyst performance by controlling the activation energy of the carbon dioxide conversion stage, which is considered advantageous compared to combinations of other diatomic transition metals.

According to an embodiment, the diatomic metal catalyst may further contain other metals or transition metals for additional reformation or modification, in addition to a combination of nickel and iron. In this case, the added metals may also be introduced in the form of single atoms.

According to an embodiment, each of nickel and iron may be decorated or supported in a form bonded (for example, coordinated) with a nitrogen atom in the nitrogen-doped carbon nanostructure. For example, nickel (Ni) is bonded to each of the four surrounding nitrogen atoms to form a $Ni-N_4$ site, while iron (Fe) is bonded to each of the five surrounding nitrogen atoms to form an $Fe-N_5$ site. These $Ni-N_4$ and $Fe-N_5$ sites may serve as active sites for the carbon dioxide reduction reaction.

According to an example, it should be noted that nickel and iron in the catalyst are adjacent to each other and indirectly linked via nitrogen, unlike a conventional Ni-Fe diatomic catalyst in which Ni and Fe are directly bonded. At this time, the nitrogen interposed between nickel and iron may be a single nitrogen atom and/or may be a plurality of nitrogen atoms (for example, N-N).

Meanwhile, according to an embodiment, the contents of nickel (Ni) and iron (Fe) are, for example, determined within the range of 0.1 to 10% by weight (for example 0.2 to 8% by weight, for example 0.4 to 5% by weight, for example 0.7 to 1.5% by weight), and for example 0.1 to 10% by weight (for example 0.2 to 8% by weight, for example 0.4 to 5% by weight, for example 0.6 to 1.3% by weight), respectively, based on the total weight of the catalyst.

In addition, the relative amount of nickel (Ni) and iron (Fe) decorated in the catalyst may be determined in consideration of the degree of interaction therebetween. For example, an atomic ratio of nickel (Ni) to iron (Fe) is, for example, controlled within the range of 1: 0.4 to 1.6, for example 1: 0.6 to 1.4, for example 1: 0.8 to 1.2.

## Method of preparing catalyst for carbon dioxide conversion

Further according to the present invention, a method for preparing a nickel (Ni)-iron (Fe) diatomic metal catalyst for converting carbon dioxide is provided. In this regard, FIG. 1 is a schematic diagram illustrating a process of preparing a diatomic metal catalyst according to an embodiment (for example, through ion adsorption method).

Referring to FIG. 1, first, carbon (or carbon particles) is provided.

In the illustrated embodiment, it is preferable to select carbon having excellent conductivity and capable of facilitating the introduction of functional groups. According to an embodiment, carbon may be at least one selected from, for example, carbon black, graphene, carbon nanotubes (CNTs), fullerene, and the like. However, carbon black may be used considering economic efficiency.

In this regard, carbon may be prepared in accordance with a method known in the art or may be selected from commercially available carbon products. For example, an organic compound as a carbon source may be converted into carbon through carbonization (for example, pyrolysis). Examples of such an organic compound include polymers (e.g., thermoplastic resins) and low molecular weight organic compounds. This organic compound may be used alone or in combination of two or more, and biomass may also be used. Examples of the carbon source may be at least one selected from conductive polymers, various petroleum products, coal, graphite, acetylene gas, and the like. The carbonization process described above is well known in the art and thus a detailed description will be omitted.

Meanwhile, according to an embodiment, carbon (or carbon particles) may have, for example, a spherical, oval, rod, or plate shape, or the like and, for example, may be in the form of a spherical powder. Further, in the illustrated embodiment, carbon may have a size of nanoscale dimensions and an average particle size of, for example, 10 to 200 nm, for example 20 to 150 nm, for example 30 to 80 nm, which may be measured, for instance by use of scanning Electron Microscope (SEM) or transmission electron microscope (TEM).

According to an embodiment, carbon may have good conductivity to induce effective electrochemical reactions, for example a conductivity of at least 1.5 $Scm^{-1}$, for example at least 2 $Scm^{-1}$, for example at least 2.5 $Scm^{-1}$, and for

example at least 2.7 $Scm^{-1}$.

Meanwhile, referring again to FIG. 1, when carbon (or carbon particles) is provided, a nitrogen-containing monomer is polymerized in-situ on the carbon by chemical oxidation using an iron-based compound as an oxidant to form an iron (Fe)-incorporated polymer/carbon composite. According to an embodiment, prior to the polymerization, acid washing or acid leaching may optionally be performed to remove impurities (e.g., inorganic impurities) and metals (e.g., alkali metals, alkali metal oxide, alkaline earth metals and/or alkaline earth metal oxide) that may be contained in the carbon to block the pore structure in the carbon. In this case, the acid may, for example, be at least one selected from sulfuric acid, nitric acid, phosphoric acid, hydrochloric acid, formic acid, and the like, and for example sulfuric acid and/or hydrochloric acid. In addition, the acid may be used in the form of an acidic aqueous solution during acid washing, and the concentration thereof may be adjusted within the range of, for example, 1 to 8 M, for example 3 to 7 M, but this is provided as an example.

In the illustrated embodiment, a nitrogen source as a monomer (nitrogen-containing monomer) is added to carbon (for example, a carbon dispersion) and iron (Fe) is introduced by bringing the carbon in contact with a polymer-type nitrogen source by attachment or coating by in-situ polymerization in the presence of an iron-based oxidizing agent (formation of iron (Fe)-incorporated polymer/carbon composite).

In this regard, carbon may first be dispersed in a liquid medium (dispersion medium) and then a nitrogen source (i.e., nitrogen-containing monomer) may be added thereto. In this case, the liquid medium may include at least one selected from water, aliphatic alcohols having 1 to 4 carbon atoms (e.g., methanol, ethanol, propanol (e.g., n-propanol and/or iso-propanol), and/or n-butanol), and the like. For example, the liquid medium is propanol. According to a specific embodiment, a mixed solvent (or mixed solution) of alcohol and water may be used as the liquid medium. At this time, the volume ratio of alcohol to water may be adjusted, for example, in the range of 1.5 to 5:1, for example 2 to 4:1, and for example 2.5 to 3.5:1, but this is provided as an example.

According to an embodiment, the nitrogen-containing monomer added to the carbon dispersion preferably contains both nitrogen and carbon and can be carbonized by a heat treatment such as pyrolysis after polymerization. One or two types of precursors may be used. In certain embodiments, examples of the nitrogen-containing monomer include urea, melamine, ammonia, adenine, pyrrole, acrylonitrile, phenanthroline, pyrazole, vinylpyridine, pyrimidine, piperazine, pyran, carbamide, morpholine, imidazole, 1-methylimidazole, 2-methylimidazole, quinoxaline, aniline, benzoimidazole, ethylenediamine, and cyanamide. According to a specific example, pyrrole may be used as the nitrogen-containing monomer. Pyrrole is preferred because each pyrrole monomer molecule contains one nitrogen, and nitrogen is effectively doped into carbon through polymerization and is uniformly doped on the surface of carbon.

In this regard, the amount of the nitrogen-containing monomer added to the carbon dispersion may be determined depending on the amount of nitrogen that is ultimately incorporated (doped) into the carbon (i.e., the doping amount of nitrogen). The entirety of added nitrogen source is not doped and is thus added in excess of the amount of actually incorporated nitrogen. For example, the ratio of nitrogen-containing monomer to carbon may be determined within the range of 0.01 to 1, for example 0.05 to 0.8, and for example 0.1 to 0.4, based on weight.

For example, the nitrogen-containing monomer may be added in a form of aqueous dispersion =and the concentration of the nitrogen-containing monomer in the dispersion may, for example, be adjusted in the range of 0.5 to 5 mmol, for example 1 to 4 mmol, for example 1.5 to 3 mmol, and this is provided as an example.

Meanwhile, according to an embodiment, the iron-based oxidizing agent may be selected from oxidizing agents which may exhibit high solubility in water or alcohol, and is typically an Fe(II) oxidizing agent and/or an Fe(III) oxidizing agent. For example, the iron-based oxidizing agent may be at least one Fe(II) oxidizing agent (compound) selected from selected from $Fe(NO_3)_2$, $FeSO_4$, $Fe(acac)_2$, $Fe(tfac)_2$, $Fe(OAc)_2$, $FeCl_2$, $FeBr_2$, $FeI_2$, and/or a hydrate thereof. In addition, the iron-based oxidizing agent may be at least one Fe(III) oxidizing agent (compound) selected from $Fe(NO_3)_3$, $Fe_2(SO_4)_3$, $Fe(acac)_3$, $Fe(tfac)_3$, $Fe(OAc)_3$, $Fe(OTs)_3$, $Fe(OTf)_3$, $FeCl_3$, $FeBr_3$, $FeI_3$, and the like, and/or a hydrate thereof. According to certain embodiments, $FeCl_3 \cdot 6H_2O$ may be used as the iron-based oxidizing agent.

The amount of the iron-based oxidizing agent used may be, for example, 0.2 to 5 times, for example 0.6 to 4 times, and for example 1 to 3 times, based on moles of monomer. In addition, the iron-based oxidizing agent may be prepared in the form of a solution (specifically, an aqueous solution) and may be then added to the carbon dispersion, into which the nitrogen-containing monomer has been introduced, for effective polymerization. At this time, the concentration of the iron-based oxidizing agent solution may be adjusted within the range of, for example, 1 to 10 mmol, for example 2 to 7 mmol, and for example 3 to 5 mmol, but this is provided as an example.

According to an embodiment, the polymerization temperature may be adjusted within the range of 5 to 60°C, for example 10 to 50°C, and for example 20 to 40°C. In addition, the polymerization time may be, for example, determined within the range of 0.1 to 30 hours, for example 1 to 20 hours, and for example 1.5 to 10 hours.

In this way, when the iron (Fe)-incorporated polymer/carbon composite is formed, the NiFe-polymer/carbon composite may be formed by attaching or introducing a nickel precursor thereto. In this regard, the nickel precursor may be introduced into the composite using supporting techniques known in the art, for example, impregnation (for example, incipient wet impregnation), precipitation, strong reducing agent reduction, polyol process, or the like. The basic principles

of the supporting techniques are well known in the art and thus description thereof will be omitted.

In an embodiment, the nickel precursor may be introduced into the iron (Fe)-incorporated polymer/carbon composite by ion adsorption and may typically be used in the form of a water-soluble compound, for example, a halide, an organic acid salt, an inorganic acid salt, a hydroxide, a complex, or a combination thereof, or may be a hydrate of the compound. For example, the inorganic acid salt may include at least one selected from nitrate, sulfate, carbonate, halide, or the like. Also, the organic acid salt may include at least one selected from acetate, alkoxide, and glutarate. In addition, the halide may include at least one selected from fluoride, chloride, bromide, iodide, and the like.

According to an embodiment, a nickel compound (for example, a salt or complex) having an oxidation value of 2+ may be used as the nickel precursor. For example, the nickel compound may include at least one selected from nickel nitrate, nickel sulfate, nickel chloride, nickel carbonate, acetylacetonate nickel complexes, nickel acetate, and the like, and/or a hydrate thereof. For example, the nickel compound may be nickel nitrate and/or a hydrate thereof (e.g., $Ni(NO_3)_2{\cdot}6H_2O$).

According to an embodiment, the nickel precursor may be provided in the form of a solution, the solvent may include at least one selected from water, an aliphatic alcohol having 1 to 4 carbon atoms (e.g., methanol, ethanol, propanol (e.g., n-propanol) and/or iso-propanol), and/or n-butanol), and the solvent is for example propanol. According to a specific example, the solvent is a mixed solvent of alcohol and water. At this time, the volume ratio of alcohol to water may be adjusted, for example, in the range of 1.5 to 5:1, for example 2 to 4:1, and for example 2.5 to 3.5:1, but this is provided as an example.

In addition, the concentration of the nickel precursor in the nickel precursor solution may be, for example, 0.05 to 0.5 mmol, for example 0.08 to 0.3 mmol, for example 0.1 to 0.2 mmol, in consideration of the degree of ion adsorption, but this is provided as an example.

According to an embodiment, an iron (Fe)-incorporated polymer/carbon composite may be added to the nickel precursor solution prepared as described above. Alternatively, a dispersion of the iron (Fe)-incorporated polymer/carbon composite (e.g., a mixed liquid medium of alcohol and water) may be prepared and then a nickel precursor or a solution thereof may be added thereto. According to an embodiment, the weight ratio of iron (Fe)-incorporated polymer/carbon composite to the nickel precursor may depend on the amount of nickel decorated (supported) in the final catalyst, and may be adjusted in the range of 1: 0.001 to 0.1, for example 1: 0.005 to 0.06, for example 1: 0.01 to 0.03 in consideration of the amount of nickel that is not actually decorated, but this is provided as an example.

Referring again to FIG. 1, pyrolysis may be performed to form a diatomic metal catalyst in which iron and nickel are each decorated or supported in the form of single atoms from the NiFe-polymer/carbon composite formed by introduction of the nickel precursor.

According to an embodiment, the pyrolysis may be performed under an inert atmosphere and the inert atmosphere may be formed by, for example, at least one gas selected from argon, nitrogen, helium, or the like, and the inert atmosphere is, for example, a nitrogen atmosphere. In addition, in the present invention, the pyrolysis temperature is adjusted at a temperature exceeding 700°C, for example in the temperature range of 720 to 1,000°C, and for example in the temperature range of 750 to 900°C. At this time, the temperature increase rate (or the heating rate) during the pyrolysis may be adjusted in consideration of the degree of aggregation of metal ions, or the like and may be, for example, within the range of 0.5 to 8°C/min, for example 1 to 6°C/min, for example 2 to 4°C/min.

In an example, the polymer/carbon composite is converted into a nitrogen-doped carbon (N-C) nanostructure through pyrolysis, while the metallic ingredients, that is, nickel (Ni) and iron (Fe), are bonded (coordinated or chelated) with the nitrogen atom doped in the nitrogen-doped carbon nanostructure acting as a support to form a $Ni\text{-}N_4$ site and a $Fe\text{-}N_5$ site, respectively, thereby providing catalytic active sites.

In this case, the bond or linkage between the $Ni\text{-}N_4$ site and the $Fe\text{-}N_5$ site may be affected by the pyrolysis temperature. As described later, the pyrolysis temperature may be adjusted such that nickel (Ni) at the $Ni\text{-}N_4$ site and iron (Fe) at the $Fe\text{-}N_5$ site are indirectly linked via nitrogen, while being adjacent to each other, rather than being directly bonded to each other. However, the pyrolysis temperature to realize the desired metal arrangement or connection is not fixed or set to a specific temperature level, but rather may be changed or adjusted depending on the properties of the nitrogen-doped carbon nanostructure formed together, the structure of carbon, the content of nitrogen, the chemical structure of the nitrogen source and the like. At this time, when the pyrolysis temperature is below a certain level, nickel (Ni) and iron (Fe) may be directly bonded to each other. Therefore, the bonding form of nickel and iron in the catalyst may be changed by adjusting the pyrolysis temperature.

Meanwhile, the pyrolysis time may affect the coordination number between nickel and iron with nitrogen, carbon conductivity, the type and content of functional group and the like. In consideration of this, the pyrolysis time is adjusted within the range of 8 hours or less, for example 0.1 to 3 hours, for example 0.5 to 2 hours.

As in the illustrated embodiment, a nitrogen-containing polymer in which iron is incorporated into carbon is formed by oxidative polymerization using an iron-based oxidizing agent, and a nickel precursor is subsequently attached thereto, followed by pyrolysis to form nickel (Ni)-iron /N-C diatomic metal catalyst. This formation method is advantageous in that the use of an additional oxidizing agent is avoided because the iron precursor acts as an oxidizing agent and is

doped.

According to an embodiment, after the pyrolysis, acid washing or acid leaching may be optionally performed to distribute nickel and iron in the form of single atoms in nitrogen-doped carbon nanostructures and remove metals (Ni and/or Fe) which have not been bonded to nitrogen atoms, particles of transition metals aggregated at high temperatures, and the like. At this time, the same acid as in the acid washing described above may be used. The concentration of the acid used in the acid washing may be controlled to a lower level. For example, the concentration may be within the range of 0.3 to 2 M, for example 0.5 to 1.5 M, and for example 0.8 to 1.2 M, but this is provided as an example. In addition, pyrolysis, or pyrolysis and acid washing are performed and at least one of common post-treatment, for example, at least one of water washing or drying may be performed to obtain a diatomic metal catalyst. Since this post-treatment is widely known in the art, a separate detailed description thereof will be omitted.

Meanwhile, the nickel-iron diatomic metal catalyst according to an embodiment has a configuration in which nickel and iron, which are adjacent to each other, are indirectly linked via nitrogen in a nitrogen-doped carbon nanostructure and thus have a significant effect on the electronic structure therebetween. As a result, it is considered that low overvoltage, high current density, and high carbon monoxide selectivity can be achieved by controlling the adsorption strength with the carbon dioxide conversion intermediate.

In this regard, the carbon dioxide uptake capacity ($CO_2$ uptake capacity; 25°C) of the catalyst is, for example, at least 1 μmol/g, for example 1.5 to 4 μmol/g, and for example 2 to 3 μmol/g.

## Electrode (catalyst electrode) and system for carbon dioxide reduction reaction

Further, according to the present invention, diatomic transition metal catalyst of nickel (Ni) and iron (Fe) may be loaded on an electrochemical electrode to realize a system for converting carbon dioxide (for example, a system for selectively reducing carbon dioxide to carbon monoxide). In particular, the electrode on which the catalyst is loaded may be applied as a cathode at which carbon monoxide is generated in the system for converting carbon dioxide.

According to an embodiment, the catalyst may be loaded on a conductive substrate in the manufacture of the electrode, for example, by loading using a slurry, deposition, spray coating, or the like.

In an embodiment, in case of the slurry loading method, first, a slurry of the previously prepared catalyst (as a dispersion medium, for example, at least one selected from the group consisting of alcohol having 1 to 4 carbon atoms (e.g., methanol, ethanol, or propanol) and water (e.g., distilled water)) may be prepared. At this time, the concentration of the catalyst slurry may be adjusted within the range of, for example, 5 to 30% by weight, for example 10 to 20% by weight. Subsequently, a catalyst electrode may be prepared by applying the slurry to an electrode substrate (e.g., a conductive substrate) and then drying the slurry.

In another embodiment, the catalyst may be loaded on the electrode using a deposition method. In this case, the catalyst layer to be loaded may be controlled by adjusting the deposition rate, drying temperature, or the like and washing may be performed after deposition.

In another embodiment, spray coating may be applied. A coating solution is prepared in the form of a mist and applied to the substrate. Examples of the spray coating include air spraying (in which a coating solution is prepared in the form of a mist using compressed air and sprayed on the substrate), ultrasonic spraying (applying coating solution formed in the form of droplets using ultrasonic waves), and electrostatic spraying (applying a high voltage to charge the coating solution within a nozzle and forming a mist through the repulsive force of the charging).

Meanwhile, according to embodiments, the substrate on which the catalyst is loaded may have any of various shapes such as a plate, a rod, a mesh, a disk, a wire or paper. In addition, the conductive substrate may be made of a material capable of maintaining conductivity even when exposed to an oxidization atmosphere, for example, at least one selected from a valve metal (for example, titanium, aluminum, chromium, or the like), and stainless steel, carbon, and the like.

In an embodiment, the amount of catalyst that is loaded is, for example, within the range of 0.2 to 5 $mg/cm^2$, for example 0.5 to 3 $mg/cm^2$, for example 0.8 to 2 $mg/cm^2$, based on the electrode, but this is provided as an example.

According to one embodiment, a carbon dioxide conversion system in which carbon dioxide is reduced using the electrochemical electrode as described above as a cathode to generate carbon monoxide at the cathode and oxygen at the anode may be implemented. For example, when voltage is applied from an external power source, electrons are supplied to the cathode and react with carbon dioxide at the cathode to generate carbon monoxide gas and hydroxide ions ($OH^-$). At this time, the generated carbon monoxide gas is discharged to the outside and hydroxide ions move to the anode. The hydroxide ions moved to the anode lose electrons (are oxidized) and are converted into oxygen gas, which is then discharged.

In this regard, the carbon dioxide conversion system basically includes a pair of opposite electrodes (i.e., an anode and a cathode), and each of the pair of electrodes is electrically connected to an external power source (e.g., a potentiostat, a battery, or the like). In addition, a three-electrode system may further include a reference electrode. The reference electrode may be made of a material selected from the group consisting of Ag/AgCl, SCE (saturated calomel

electrode), Hg/HgO, and $Hg/Hg_2SO_4$, specifically, Ag/AgCl (3M NaCl).

According to an embodiment, in the carbon dioxide conversion system, among a pair of electrodes, an electrochemical electrode containing the aforementioned catalyst or being attached thereto is used as a cathode and the other electrode, the anode may be made of a type of material known in the art. In this regard, the anode may also be made of a conductive material. For example, the conductive material applicable to the cathode may be selected from materials capable of exhibiting particularly low overpotential, while easily generating carbon monoxide and not being decomposed even when contacting electrolyte (an aqueous electrolyte solution) and, for example, this material may include at least one selected from nickel, carbon, titanium, stainless steel, and the like, or an alloy thereof. In the carbon dioxide conversion system according to a certain embodiment, each of the cathode and the anode may be operated in such a manner that the entire surface of thereof is in contact with or immersed in an electrolyte-containing aqueous solution.

Meanwhile, according to an embodiment, an aqueous electrolyte solution (which may be alkaline) in which the electrolyte is dissolved in the aqueous medium may be supplied to the carbon dioxide conversion system. In this case, the electrolyte may include at least one selected from potassium hydroxide, potassium hydrogen carbonate, potassium bicarbonate, sodium hydrogen carbonate, sodium hydroxide, lithium hydroxide, and the like. For example, the electrolyte may be potassium hydrogen carbonate. For example, the concentration of the electrolyte may be, for example, within the range from 0.05 to 3 M, for example from 0.07 to 2 M, and for example from 0.1 to 1 M. In addition, the pH of the electrolyte-containing aqueous solution may be adjusted within a neutral or basic range, for example, within a range of 6.5 to 14, for example 7 to 14, and for example 8 to 14.

Alternatively, a carbon dioxide conversion system may be configured using a polymer electrolyte membrane or the like as a separator. This separator is typically an ion exchange membrane, for example, such as an anion exchange membrane, that is disposed between the cathode and the anode, and functions to isolate an anode compartment from a cathode compartment. In this regard, examples of separator materials include porous ceramic membranes, for example, such as zirconia-based membranes, porous polymeric membranes, for example, such as polyolefin-based or polypropylene-based membranes, solid polymer electrolyte membranes, for example, such as an ion exchange membrane made of a fluorosulfonic acid polymer under the trade name Nafion, and the like.

In general, the reduction reaction of carbon dioxide in the thermodynamic standard state occurs around 0 V (vs. RHE), but occurs at a negative potential taking into consideration the concentration region of hydrogen ions which actually participate in the reaction. Moreover, a higher overpotential is required to electrochemically reduce carbon dioxide, considering the reaction rate. In addition, in the carbon dioxide reduction, it is preferable to suppress the hydrogen generation reaction (HER) occurring at a similar reduction potential. The potential allowing current of the identical intensity to flow through the pair of opposite electrodes differs at each electrode and the voltage at this time corresponds to the overpotential at each electrode.

In the carbon dioxide conversion system including the electrochemical electrode using the composite catalyst according to the present embodiment, the reduction can be performed at a low overpotential. For example, when carbon monoxide is generated at the cathode, operation is possible at a low overvoltage. In addition, the carbon dioxide reduction reaction may be performed at, for example, 15 to 40°C, for example 20 to 30°C, and for example at room temperature.

When the electrochemical electrode loaded with the single atom catalyst according to an embodiment is used as a cathode, the cell voltage in the presence of a 0.1 M $KHCO_3$ (pH 8.3) electrolyte solution and at a current density of 200 $mA/cm^2$ may be, for example, 3.3 V or less, for example 3.2 V or less, for example 3 V or less, and for example 2.88 V or less.

Meanwhile, Faraday efficiency is an index for evaluating the efficiency and selectivity of an electrochemical reaction and may be represented by Equation 1 below.

[Equation 1]

$$FE = \frac{z \times n \times F}{I \times t} \times 100$$

wherein z is the number of electrons, n is the molar ratio of the product, I is the applied current, t is the reaction duration, and F is the Faraday constant.

In an embodiment, the Faraday efficiency may be at least 90%, for example at least 93%, for example at least 95%, for example at least 97%.

Hereinafter, preferred embodiments will be provided for better understanding of the present invention.

## Example

The details of the materials used in this Example, catalyst analysis and electrochemical performance test are as

follows.

**A. Materials**

- Vulcan XC-72R carbon was purchased from Fuel cell store.
- A pyrrole ($C_4H_5N$) monomer, nitric acid, sulfuric acid, potassium bicarbonate, propanol, and nickel nitrate hexahydrate were each purchased from Sigma-Aldrich.
- Iron (III) chloride hexahydrate was purchased from Alfa Aesar.
- Sigracet 39BB carbon paper and commercial Ag/C electrodes were purchased from Dioxide Materials.
- Deionized water (DI, 18 MΩ cm) was purchased from Millipore and used throughout the entire experiment.

**B. Physical chemical catalyst analysis**

High-resolution transmittance electron microscopy (HR-TEM) and element mapping analysis were performed using a JEM-2100 F provided with HAADF-STEM detectors.

The metal crystal surface was observed using X-ray diffraction (XRD; PANalytical). Here, measurement was performed at 40 kV and 100 mA using a Cu Kα line in the range of 10 to 80° at a scan rate of 6°/min at an interval of 0.01°.

- Ni K-edge XAFS spectrum in the range of 8132-9078 eV photon energy and Fe K-edge XAFS spectrum in the range of 6910-8082 eV photon energy were obtained using X-ray absorption fine structure (XAFS; PLS-II).
- The content of the metal (wt%) in the prepared catalyst was obtained using inductively coupled plasma atomic emission spectroscopy (ICP-AES, NexION 300X).
- The XPS spectrum of surface element was obtained using a high-performance X-ray photoelectron spectrometer (XPS; VG multilab 2000).
- The specific surface area ($m^2/g$) of the prepared catalyst was obtained by measuring the $N_2$ sorption isotherm at -196°C through BET analysis (Brunauer-Emmett-Teller analysis; Quadrasorb SI).

**C. Electrochemical test**

Carbon paper (Sigracet 39BB, Dioxide Materials) was coated with the catalyst in a loading amount of 1 mg/$cm^2$ using a spray gun to form a cathode, and a commercial $IrO_2$ catalyst and a Sustainion anion exchange membrane (Dioxide Materials) were used, respectively, as an oxidization electrode and a separator. In addition, a separator was placed between the anode and the cathode to form a membrane electrode assembly (MEA) with an active area of 5 $cm^2$ to finally assemble an electrochemical cell.

A 0.1 M $KHCO_3$ solution (neutral pH) was used as the electrolyte, which was circulated to the oxidation electrode at a rate of 3 mL/min, and carbon dioxide gas was continuously supplied to the reduction electrode.

The electrochemical carbon dioxide conversion performance was measured at 200 mA/$cm^2$ using chronopotentiometry and the generated gas was analyzed by gas chromatography (Agilent 7890).

**Example 1**

Preparation of NiFe-DAC

Vulcan XC-72R Carbon (Fuel cell store) was acid-treated with a mixed solution of 6 M $HNO_3$ and 6 M $H_2SO_4$ for one day and dried. 400 mg of the dried carbon was dispersed in a mixed solvent of propanol (Sigma) /distilled water (volume ratio of 3:1), and a pyrrole monomer (2.2 mmol) dispersed in 10 mL of distilled water was then added thereto, followed by stirring for 30 minutes to prepare a suspension.

Next, iron (III) chloride hexahydrate (4.4 mmol) was dissolved in 10 mL of distilled water and the resulting solution was added to the suspension, followed by stirring for 4 hours to prepare an Fe-doped polypyrrole-carbon complex (Fe-PPyC).

Subsequently, NiFe-DAC was prepared using incipient wetness impregnation. Specifically, 150 mg of the previously synthesized Fe-PPyC was added to a metal precursor solution containing 0.11 mmol of nickel nitrate hexahydrate dissolved in 4 mL of propanol/distilled water (volume ratio of 3:1), followed by ultrasonic treatment for 2 hours and drying. Next, pyrolysis was performed at 800°C for 1 hour under $N_2$ atmosphere, and finally, impurities were removed by washing with 1M $H_2SO_4$ solution to obtain NiFe-DAC (diatomic catalyst).

**Comparative Example 1**

Preparation of Fe-SAC

Fe-SAC (single atomic catalyst) was prepared in the same manner as in Example 1, except that pyrolysis of Fe-PPyC was performed without using nickel nitrate hexahydrate.

**Comparative Example 2**

Preparation of NiFe-DAC (Direct)

NiFe-DAC(Direct) was prepared in the same manner as in Example 1, except that the pyrolysis temperature under $N_2$ atmosphere was set to 700°C.

**Comparative Example 3**

Ag/C (dioxide material), a commercial cathode catalyst, was used.

**Catalyst characterization**

- HADDF-STEM analysis

HADDF-STEM analysis was performed on the NiFe-DAC catalyst prepared in Example 1 and the results are shown in FIGS. 2A to 2C.

Referring to FIGS. 2A to 2C, the catalyst of Example 1 had a configuration in which Ni and Fe form a diatomic structure with an average interval of 0.27 nm particularly, 65% of observed single atoms exist in pairs.

- XRD analysis

The XRD patterns of the catalyst in Example 1 (NiFe-DAC) and the catalyst in Comparative Example 1 (Fe-SAC) are shown in FIG. 3.

Referring to FIG. 3, in all of catalysts in Example 1 and Comparative Example 1, no peaks related to other metals were observed other than the carbon peak (002 plane) around 22°. These results indicate that Ni and Fe are homogeneously distributed in the form of single atoms in the carbon support without the formation of metal crystal particles.

- XPS analysis

XPS analysis was performed on the catalyst (NiFe-DAC) prepared in Example 1 and the catalyst (Fe-SAC) prepared in Comparative Example 1, respectively, and the results are shown in FIG. 4.

Referring to FIG. 4, the catalyst (NiFe-DAC) according to Example 1 exhibited Ni 2p and Fe 2p peaks, which indicates that active metals, Ni and Fe, coexist in the carbon support.

Meanwhile, the catalyst (Fe-SAC) according to Comparative Example 1 exhibited only the Fe 2p peak, which indicates that only Fe exists as an active metal in the catalyst. In addition, in Fe in the NiFe DAC, the Fe 2p peak shifted to a higher binding energy, which indicates that the electronic structure changed due to further addition of Ni.

- Analysis of metal content in catalyst

ICP analysis was performed on metals (Ni and/or Fe) in the catalysts prepared in Example 1 and Comparative Example 1 and the results are shown in Table 1 below.

[Table 1]

| Item | Ni (wt%) | Fe (wt%) |
|---|---|---|
| NiFe-DAC | 0.95 | 0.86 |
| Fe-SAC | - | 0.92 |

According to Table above, Ni and Fe are introduced into the catalyst (NiFe-DAC) of Example 1.

- EXAFS analysis

EXAFS analysis was performed on each of the catalysts according to Example 1 (NiFe-DAC) and the catalyst according to Comparative Example 1 (Fe-SAC) and the results are shown in FIG. 5A.

As can be seen from FIG. 5A, the Fe K-edge Fourier-transformed (FT) EXAFS spectrum showed that both NiFe-DAC and Fe-SAC have Fe-N peaks. This indicates that Fe exists as a single atom bonded with N. In addition, the Ni FT-EXAFS spectrum shows that Ni of NiFe-DAC is bonded to N and exists as a single atom. The result of EXAFS fitting shows that Ni is bonded to four N atoms, while Fe is bonded to five N atoms.

Meanwhile, EXAFS analysis was performed on the catalyst according to Example 1 (NiFe-DAC) and the catalyst according to Comparative Example 2 (NiFe-DAC (Direct)) and the results are shown in FIG. 5B.

As can be seen from 5B, the catalyst (NiFe-DAC (Direct)) according to Comparative Example 2 exhibited a minor peak corresponding to the Fe-Ni bond around 2.5 Å, in addition to the Fe-N peak corresponding to the single atom. The results indicate that NiFe-DAC (Direct) has an additional Fe-Ni bond, which suggests that additional Fe-Ni bond affects the electronic structure and ultimately has production efficiency of carbon monoxide by carbon dioxide conversion distinguished from the catalyst according to Example 1.

- BET analysis

BET analysis was performed on each of the catalyst according to Example 1 (NiFe-DAC) and the catalyst according to Comparative Example 1 (Fe-SAC) and the results are shown in FIG. 6. As can be seen from FIG. 6, the catalysts prepared according to Example 1 and Comparative Example 1 exhibited similar pore structures, specific surface areas (approximately 148 to 152 $m^2/g$), and pore volumes (total pore volume). The reason for having such a similar pore structure is because heat treatment was performed at the same temperature.

## Electrochemical performance evaluation

Faradaic efficiency for carbon monoxide production (200 $mA/cm^2$ constant current conditions) was measured on the catalyst according to Example 1 (NiFe-DAC), and catalysts according to Comparative Examples 1 to 3 (Fe-SAC, NiFe-DAC (Direct), and Ag/C), and the results are shown in FIG. 7.

As can be seen from FIG. 7, the NiFe-DAC catalyst has a Faradaic efficiency for high carbon monoxide production at the lowest voltage, compared to the single-atom catalyst Fe-SAC, NiFe-DAC (Direct), and commercial Ag/C.

It can be seen from the results of physical and chemical analysis described above that the $Ni-N_4$ site and the $Fe-N_5$ site are adjacent to each other in the NiFe-DAC catalyst, thereby inducing a synergistic effect through strong electrical interaction, appropriately controlling electronic structure of the NiFe-DAC catalyst, and promoting the conversion of carbon dioxide to carbon monoxide.

As apparent from the foregoing, the nickel (Ni)-iron (Fe) diatomic metal catalyst according to the present invention has a configuration in which two species of single-atom transition metals, that is, nickel (Ni) and iron (Fe), are decorated or supported on a nitrogen-doped carbon nanostructure such that they are adjacent to each other and are indirectly linked (bonded) via nitrogen. As a result, the nickel (Ni)-iron (Fe) diatomic metal catalyst exhibits better carbon dioxide conversion performance (low overpotential, high current density and high carbon monoxide selectivity), compared to the single-metal monoatomic catalyst as well as the diatomic metal catalyst in which nickel (Ni) and iron (Fe) are directly bonded to each other. In addition, the nickel (Ni)-iron (Fe) diatomic metal catalyst according to the present invention exhibits improved electrochemical catalytic activity in the carbon dioxide reduction reaction, compared to commercial noble metal catalysts in spite of using inexpensive transition metals or base metals, thus being advantageous in terms of economic feasibility. Furthermore, the nickel (Ni)-iron (Fe) diatomic metal catalyst according to the present invention can be prepared by a simple procedure such as ion adsorption and is applied to an electrode (i.e., cathode) of an electrochemical system for carbon dioxide conversion to reduce carbon dioxide and at the same time to effectively produce a high value-added compound (for example, carbon monoxide, which is a constituent component of syngas). Therefore, the nickel (Ni)-iron (Fe) diatomic metal catalyst according to the present invention is expected to be widely applied in the future.

## Claims

**1.** A diatomic metal catalyst for electrochemically reducing carbon dioxide, the catalyst comprising:

(i) a support comprising a nitrogen-doped carbon nanostructure; and
(ii) nickel (Ni) and iron (Fe) in the form of single atoms each decorated on the support,

wherein the nickel (Ni) is bonded to each of four surrounding nitrogen atoms, while the iron (Fe) is bonded to each of five surrounding nitrogen atoms to form a $Ni-N_4$ site and a $Fe-N_5$ site, respectively, and
Ni at the $Ni-N_4$ site and Fe at the $Fe-N_5$ site are adjacent to each other and are indirectly linked to each other via nitrogen.

**2.** The catalyst according to claim 1, wherein a content of the nickel (Ni) and a content of the iron (Fe) are determined within the range of 0.1 to 10% by weight and 0.1 to 10% by weight, based on the total weight of the catalyst, respectively.

**3.** The catalyst according to any preceding claim, wherein an atomic ratio of nickel (Ni) to iron (Fe) in the catalyst is determined within a range of 1:0.4 to 1:1.6.

**4.** The catalyst according to any preceding claim, wherein the catalyst has a specific surface area of 100 to 300 $m^2/g$ and a pore volume of 0.1 to 0.5 $cm^3/g$, as obtained by measuring the $N_2$ sorption isotherm at -196°C through BET analysis.

**5.** The catalyst according to any preceding claim, wherein a content of the nitrogen in the nitrogen-doped carbon nanostructure is determined within a range of 1 to 12 atom%.

**6.** A method of preparing a catalyst according to any preceding claim, the method comprising:

a) attaching a nitrogen-containing monomer to carbon and performing in-situ polymerization using an iron-based oxidizing agent to form an iron (Fe)-incorporated polymer/carbon composite;
b) attaching a nickel precursor to the iron (Fe) - incorporated polymer/carbon composite to form a NiFe-polymer/carbon composite; and
c) subjecting the NiFe-polymer/carbon composite to pyrolysis to decorate nickel (Ni) and iron (Fe) as single atoms on a support comprising a nitrogen-doped carbon (N-C) nanostructure,
wherein the nickel (Ni) is bonded to each of four surrounding nitrogen atoms, while the iron (Fe) is bonded to each of five surrounding nitrogen atoms to form a $Ni-N_4$ site and an $Fe-N_5$ site, respectively, and
Ni at the $Ni-N_4$ site and Fe at the $Fe-N_5$ site are adjacent to each other and are indirectly linked to each other via nitrogen,
wherein the pyrolysis in step c) is performed at a temperature higher than 700°C for 8 hours or less.

**7.** The method according to claim 6, wherein the carbon comprises at least one selected from the group consisting of carbon black, graphene, carbon nanotube (CNT), and fullerene.

**8.** The method according to claim 6 or claim 7, wherein the carbon has a nanoscale dimension and an average particle size of 10 to 200 nm.

**9.** The method according to any of claims 6 to 8, wherein the nitrogen-containing monomer comprises at least one selected from the group consisting of urea, melamine, ammonia, adenine, pyrrole, acrylonitrile, phenanthroline, pyrazole, vinylpyridine, pyrimidine, piperazine, pyran, carbamide, morpholine, imidazole, 1-methylimidazole, 2-methylimidazole, quinoxaline, aniline, benzoimidazole, ethylenediamine, and cyanamide.

**10.** The method according to any of claims 6 to 9, wherein the iron-based oxidizing agent is an Fe(II) oxidizing agent and/or an Fe(III) oxidizing agent.

**11.** The method according to any of claims 6 to 10, wherein the nickel precursor comprises at least one selected from the group consisting of nickel nitrate, nickel sulfate, nickel chloride, nickel carbonate, a nickel acetylacetonate complex, and nickel acetate, or a hydrate thereof.

**12.** An electrode for electrochemically converting carbon dioxide comprising:

an electrode substrate; and
a diatomic metal catalyst according to any one of claims 1 to 5 loaded on the electrode substrate.

**13.** The electrode according to claim 12, wherein an amount of the diatomic metal catalyst loaded in the electrode is determined within a range of 0.2 to 5 $mg/cm^2$.

**14.** A carbon dioxide reduction system comprising:

an anode and a cathode as electrochemical electrodes electrically connected to an external power source; and an aqueous electrolyte filled between the anode and the cathode,
wherein the system is configured such that, upon application of a voltage from the external power source, oxygen is generated at the anode and carbon monoxide is generated at the cathode, and
wherein the cathode comprises a diatomic metal catalyst according to any one of claims 1 to 5 loaded on an electrode substrate.

**Patentansprüche**

**1.** Zweiatomiger Metallkatalysator zum elektrochemischen Reduzieren von Kohlendioxid, wobei der Katalysator Folgendes umfasst:

(i) einen Träger, umfassend eine Stickstoff-dotierte Kohlenstoff-Nanostruktur;
und
(ii) Nickel (Ni) und Eisen (Fe) in Form von einzelnen Atomen, die jeweils auf dem Träger aufgebracht sind,
wobei das Nickel (Ni) an jedes der vier umgebenden Stickstoffatome gebunden ist, während das Eisen (Fe) an jedes der fünf umgebenden Stickstoffatome gebunden ist, um jeweils eine Ni-$N_4$-Stelle und eine Fe-$N_5$-Stelle auszubilden, und
Ni an der Ni-$N_4$-Stelle und Fe an der Fe-$N_5$-Stelle benachbart zueinander liegen und über Stickstoff indirekt miteinander verbunden sind.

**2.** Katalysator nach Anspruch 1, wobei ein Gehalt an Nickel (Ni) und ein Gehalt an Eisen (Fe) innerhalb des Bereichs von jeweils 0,1 bis 10 Gew.-% und 0,1 bis 10 Gew.-%, bezogen auf das Gesamtgewicht des Katalysators, bestimmt werden.

**3.** Katalysator nach einem der vorhergehenden Ansprüche, wobei das Atomverhältnis von Nickel (Ni) zu Eisen (Fe) in dem Katalysator innerhalb eines Bereichs von 1:0,4 bis 1:1,6 bestimmt wird.

**4.** Katalysator nach einem der vorhergehenden Ansprüche, wobei der Katalysator einen spezifischen Oberflächenbereich von 100 bis 300 $m^2$/g und ein Porenvolumen von 0,1 bis 0,5 $cm^3$/g aufweist, wie durch das Messen der $N_2$-Sorptionsisotherme bei - 196 °C durch eine BET-Analyse erhalten wird.

**5.** Katalysator nach einem der vorhergehenden Ansprüche, wobei der Stickstoffgehalt in der Stickstoff-dotierten Kohlenstoff-Nanostruktur innerhalb eines Bereichs von 1 bis 12 Atom-% bestimmt wird.

**6.** Verfahren zum Herstellen eines Katalysators nach einem der vorhergehenden Ansprüche, wobei das Verfahren Folgendes umfasst:

a) Binden eines Stickstoff-haltigen Monomers an Kohlenstoff und Durchführen einer In-situ-Polymerisation unter Verwendung eines Oxidationsmittels auf Eisenbasis, um einen Eisen-(Fe-)inkorporierten Polymer/Kohlenstoff-Verbundstoff auszubilden;
b) Binden eines Nickelvorläufers an den Eisen-(Fe- )inkorporierten Polymer/Kohlenstoff-Verbundstoff, um einen NiFe-Polymer/Kohlenstoff-Verbundstoff auszubilden; und
c) Unterziehen des NiFe-Polymer/Kohlenstoff-Verbundstoffs einer Pyrolyse, um Nickel (Ni) und Eisen (Fe) als einzelne Atome auf einem Träger mit einer Stickstoff-dotierten Kohlenstoff-(N-C-)Nanostruktur aufzubringen,
wobei das Nickel (Ni) an jedes der vier umgebenden Stickstoffatome gebunden ist, während das Eisen (Fe) an jedes der fünf umgebenden Stickstoffatome gebunden ist, um jeweils eine und eine Fe-$N_5$-Stelle auszubilden, und
Ni an der und Fe an der Fe-$N_5$-Stelle benachbart zueinander liegen und über Stickstoff indirekt miteinander verbunden sind,
wobei die Pyrolyse in Schritt c) bei einer Temperatur von mehr als 700 °C für 8 Stunden oder weniger durchgeführt wird.

**7.** Verfahren nach Anspruch 6, wobei der Kohlenstoff mindestens einen Stoff umfasst, ausgewählt aus der Gruppe bestehend aus Ruß, Graphen, Kohlenstoff-Nanoröhren (CNT) und Fulleren.

**8.** Verfahren nach Anspruch 6 oder Anspruch 7, wobei der Kohlenstoff eine nanoskalige Abmessung und eine durchschnittliche Teilchengröße von 10 bis 200 nm aufweist.

**9.** Verfahren nach einem der Ansprüche 6 bis 8, wobei das Stickstoff-haltige Monomer mindestens einen der Stoffe umfasst, ausgewählt aus der Gruppe bestehend aus Harnstoff, Melamin, Ammoniak, Adenin, Pyrrol, Acrylnitril, Phenanthrolin, Pyrazol, Vinylpyridin, Pyrimidin, Piperazin, Pyran, Carbamid, Morpholin, Imidazol, 1-Methylimidazol, 2-Methylimidazol, Chinoxalin, Anilin, Benzoimidazol, Ethylendiamin und Cyanamid.

**10.** Verfahren nach einem der Ansprüche 6 bis 9, wobei das Oxidationsmittel auf Eisenbasis ein Fe(II)-Oxidationsmittel und/oder ein Fe(III)-Oxidationsmittel ist.

**11.** Verfahren nach einem der Ansprüche 6 bis 10, wobei der Nickelvorläufer mindestens eine Verbindung umfasst, ausgewählt aus der Gruppe bestehend aus Nickelnitrat, Nickelsulfat, Nickelchlorid, Nickelcarbonat, einem Nickelacetylacetonat-Komplex und Nickelacetat oder einem Hydrat davon.

**12.** Elektrode zum elektrochemischen Umwandeln von Kohlendioxid, umfassend:

ein Elektrodensubstrat; und
einen zweiatomigen Metallkatalysator nach einem der Ansprüche 1 bis 5, der auf das Elektrodensubstrat geladen ist.

**13.** Elektrode nach Anspruch 12, wobei eine Menge des zweiatomigen Metallkatalysators, der in die Elektrode geladen ist, innerhalb eines Bereichs von 0,2 bis 5 $mg/cm^2$ bestimmt wird.

**14.** Kohlendioxid-Reduktionssystem, umfassend:

eine Anode und eine Kathode als elektrochemische Elektroden, die mit einer externen Leistungsquelle elektrisch verbunden sind; und
ein wässriger Elektrolyt, der zwischen der Anode und der Kathode eingebracht ist,
wobei das System so konfiguriert ist, dass beim Anlegen einer Spannung von der externen Leistungsquelle Sauerstoff an der Anode und Kohlenmonoxid an der Kathode erzeugt wird, und
wobei die Kathode einen zweiatomigen Metallkatalysator nach einem der Ansprüche 1 bis 5 umfasst, der auf ein Elektrodensubstrat geladen ist.

## Revendications

**1.** Catalyseur métallique diatomique destiné à réduire électrochimiquement du dioxyde de carbone, le catalyseur comprenant :

(i) un support comprenant une nanostructure de carbone dopée à l'azote ; et
(ii) du nickel (Ni) et du fer (Fe) sous forme d'atomes uniques décorés chacun sur le support,
dans lequel le nickel (Ni) est lié à chacun des quatre atomes d'azote environnants, tandis que le fer (Fe) est lié à chacun des cinq atomes d'azote environnants pour former un site Ni-$N_4$ et un site Fe-$N_3$, respectivement, et Ni sur le site Ni-$N_4$ et Fe sur le site Fe-$N_5$ sont adjacents l'un à l'autre et sont indirectement liés l'un à l'autre par de l'azote.

**2.** Catalyseur selon la revendication 1, dans lequel une teneur en nickel (Ni) et une teneur en fer (Fe) sont déterminées dans la plage de 0,1 à 10 % en poids et de 0,1 à 10 % en poids, sur la base du poids total du catalyseur, respectivement.

**3.** Catalyseur selon l'une quelconque des revendications précédentes, dans lequel un rapport atomique du nickel (Ni) au fer (Fe) dans le catalyseur est déterminé dans une plage de 1:0,4 à 1:1,6.

**4.** Catalyseur selon l'une quelconque des revendications précédentes, dans lequel le catalyseur présente une surface spécifique de 100 à 300 $m^2/g$ et un volume de pores de 0,1 à 0,5 $cm^3/g$, tels qu'obtenus en mesurant l'isotherme de sorption de $N_2$ à -196 °C par analyse BET [analyse Brunauer-Emmett-Teller]).

**5.** Catalyseur selon une quelconque revendication précédente, dans lequel une teneur en azote dans la nanostructure

de carbone dopée à l'azote est déterminée dans une plage de 1 à 12 % d'atomes.

6. Procédé de préparation d'un catalyseur selon l'une quelconque des revendications précédentes, le procédé comprenant :

   a) la fixation d'un monomère contenant de l'azote au carbone et la réalisation d'une polymérisation in situ en utilisant un agent oxydant à base de fer pour former un composite polymère/carbone incorporé dans du fer (Fe) ;
   b) la fixation d'un précurseur de nickel au composite polymère/carbone incorporé dans du fer (Fe) pour former un composite polymère/carbone NiFe ; et
   c) l'exposition du composite polymère/carbone NiFe à une pyrolyse pour décorer le nickel (Ni) et le fer (Fe) en tant qu'atomes uniques sur un support comprenant une nanostructure de carbone (N-C) dopée à l'azote,
   dans lequel le nickel (Ni) est lié à chacun des quatre atomes d'azote environnants, tandis que le fer (Fe) est lié à chacun des cinq atomes d'azote environnants pour former un site
   $Ni-N_4$ et un site $Fe-N_3$, respectivement, et
   Ni sur le site $Ni-N_4$ et Fe sur le site $Fe-N_3$ sont adjacents l'un à l'autre et sont indirectement liés l'un à l'autre par l'azote,
   dans lequel la pyrolyse dans l'étape c) est réalisée à une température supérieure à 700 °C pendant une durée inférieure ou égale à 8 heures.

7. Procédé selon la revendication 6, dans lequel le carbone comprend au moins un élément choisi dans le groupe comprenant du noir de carbone, du graphène, un nanotube de carbone (CNT) et du fullerène.

8. Procédé selon la revendication 6 ou la revendication 7, dans lequel le carbone a une dimension à l'échelle nanométrique et une taille moyenne de particule de 10 à 200 nm.

9. Procédé selon l'une quelconque des revendications 6 à 8, dans lequel le monomère contenant de l'azote comprend au moins un élément choisi dans le groupe comprenant de l'urée, de la mélamine, de l'ammoniac, de l'adénine, du pyrrole, de l'acrylonitrile, de la phénanthroline, du pyrazole, de la vinylpyridine, de la pyrimidine, de la pipérazine, du pyrane, du carbamide, de la morpholine, de l'imidazole, du 1-méthylimidazole, du 2-méthylimidazole, de la quinoxaline, de l'aniline, du benzoimidazole, de l'éthylènediamine et du cyanamide.

10. Procédé selon l'une quelconque des revendications 6 à 9, dans lequel l'agent oxydant à base de fer est un agent oxydant à base de Fe(II) et/ou un agent oxydant à base de Fe(III).

11. Procédé selon l'une quelconque des revendications 6 à 10, dans lequel le précurseur de nickel comprend au moins un élément choisi dans le groupe comprenant du nitrate de nickel, du sulfate de nickel, du chlorure de nickel, du carbonate de nickel, un complexe d'acétylacétonate de nickel, et de l'acétate de nickel, ou un hydrate de ceux-ci.

12. Electrode pour la conversion électrochimique de dioxyde de carbone comprenant :
    un substrat d'électrode ; et
    un catalyseur métallique diatomique selon l'une quelconque des revendications 1 à 5, chargé sur le substrat d'électrode.

13. Électrode selon la revendication 12, dans laquelle une quantité du catalyseur métallique diatomique chargé dans l'électrode est déterminée dans une plage de 0,2 à 5 $mg/cm^2$.

14. Système de réduction de dioxyde de carbone comprenant :

    une anode et une cathode en tant qu'électrodes électrochimiques connectées électriquement à une source d'alimentation externe ; et
    un électrolyte aqueux rempli entre l'anode et la cathode,
    dans lequel le système est configuré de telle sorte que, lors de l'application d'une tension à partir de la source d'alimentation externe, de l'oxygène est généré sur l'anode et du monoxyde de carbone est généré sur la cathode, et
    dans lequel la cathode comprend un catalyseur métallique diatomique selon l'une quelconque des revendications 1 à 5 chargé sur un substrat d'électrode.

Fig. 1

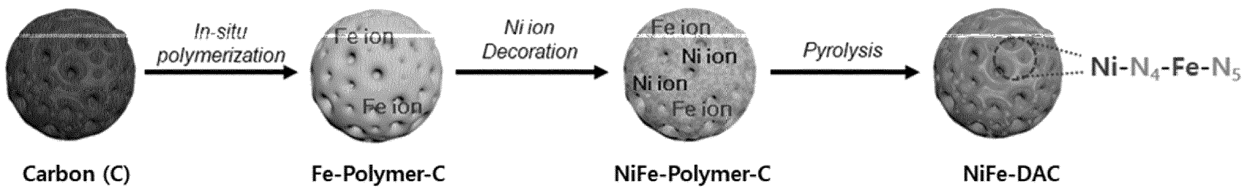
In-situ polymerization
Ni ion Decoration
Pyrolysis
Fe ion
Ni ion
Ni-N4-Fe-N5
Carbon (C)
Fe-Polymer-C
NiFe-Polymer-C
NiFe-DAC

Fig. 2A

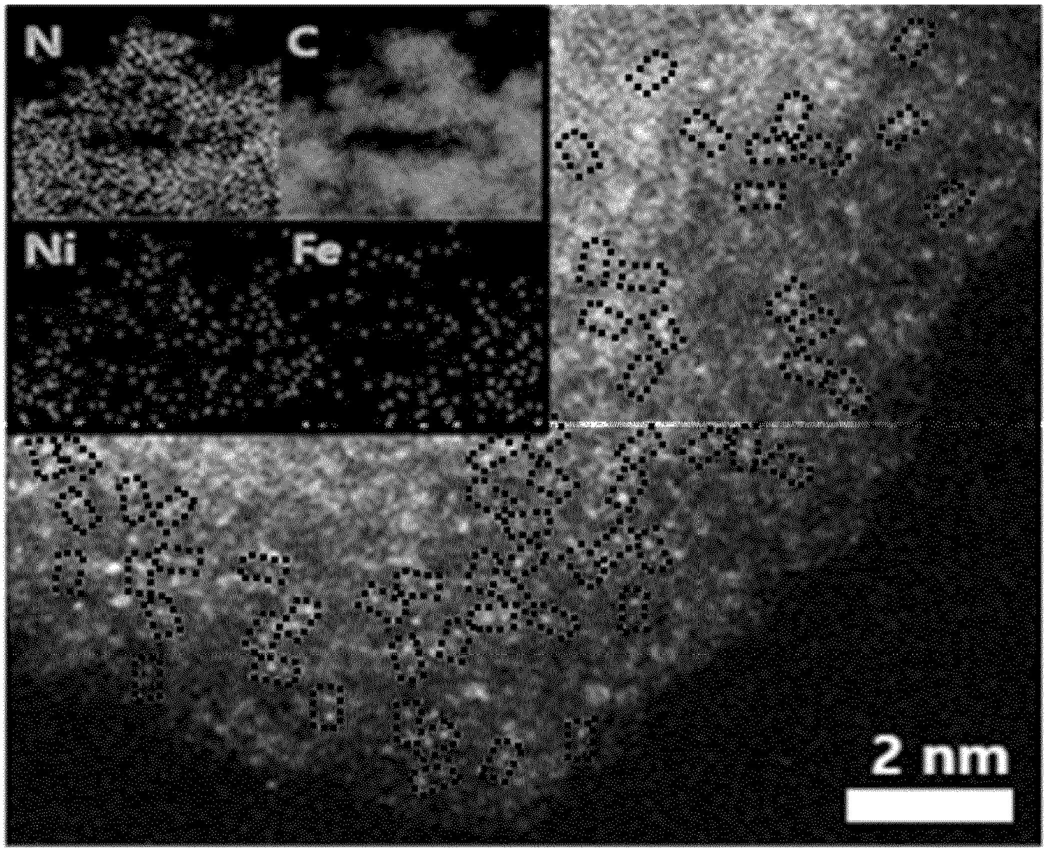

Fig. 2B

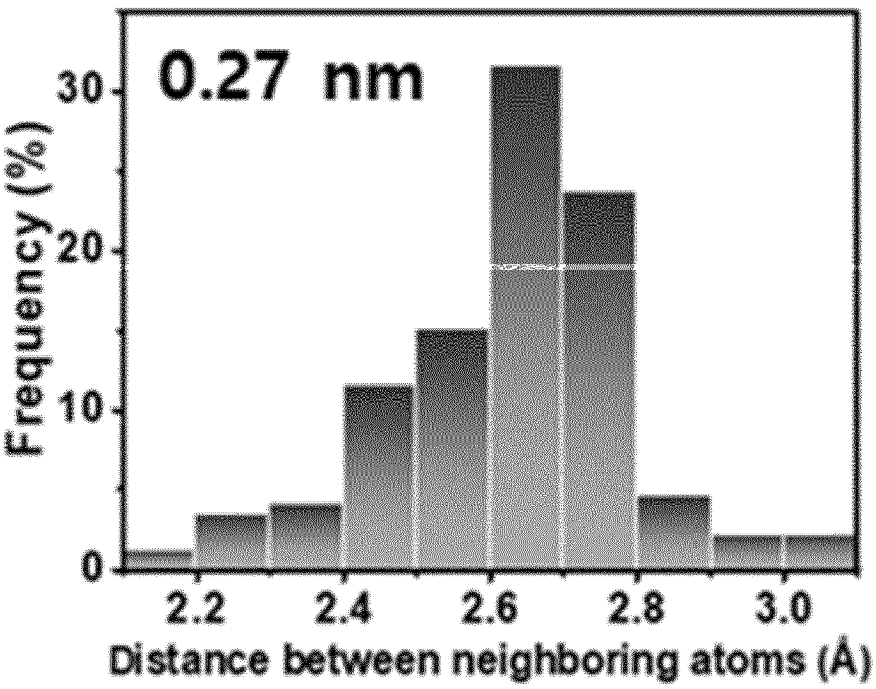
0.27 nm
Frequency (%)
30
20
10
0
2.2
2.4
2.6
2.8
3.0
Distance between neighboring atoms (Å)

Fig. 2C

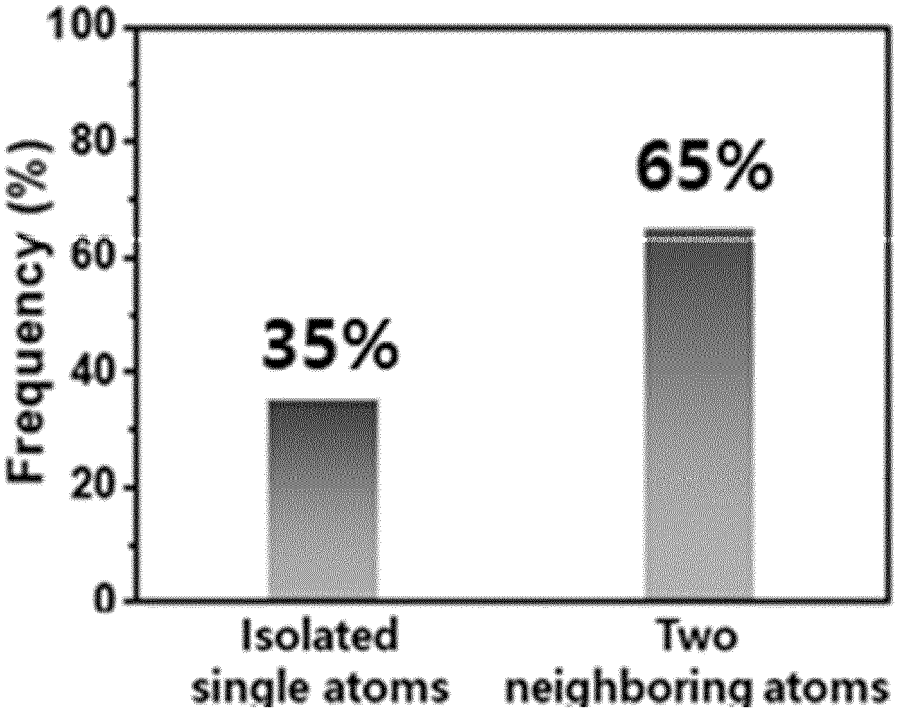
100
80
60
40
20
0
Frequency (%)
65%
35%
Isolated single atoms
Two neighboring atoms

Fig. 3

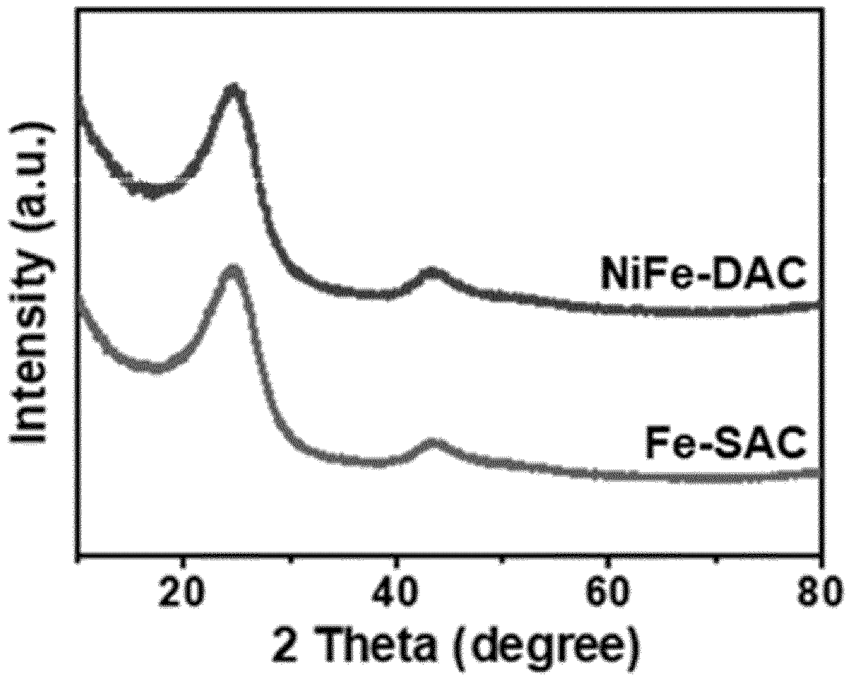

Fig. 4

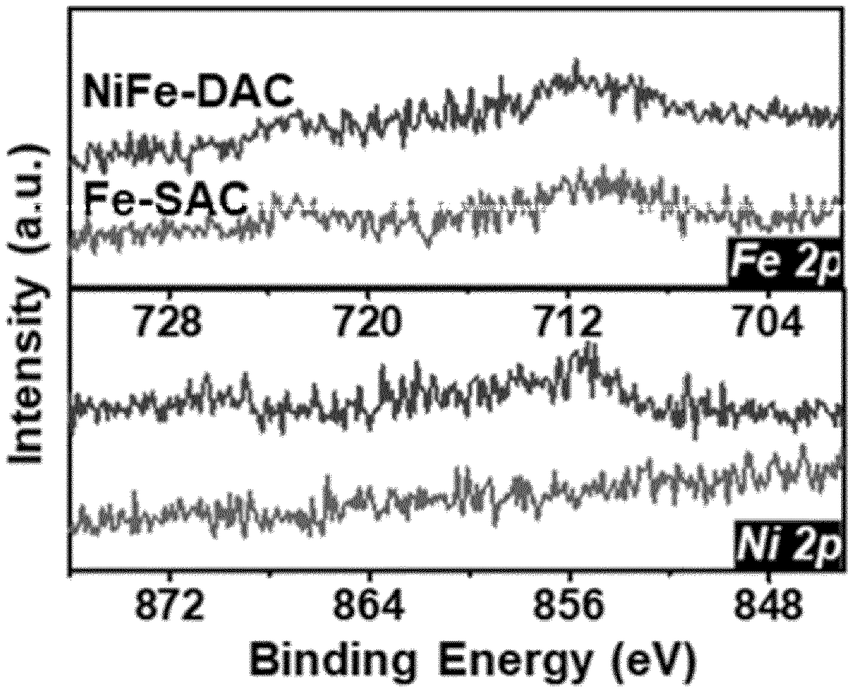
NiFe-DAC
Fe-SAC
Fe 2p
Ni 2p
Intensity (a.u.)
728
720
712
704
872
864
856
848
Binding Energy (eV)

Fig. 5A

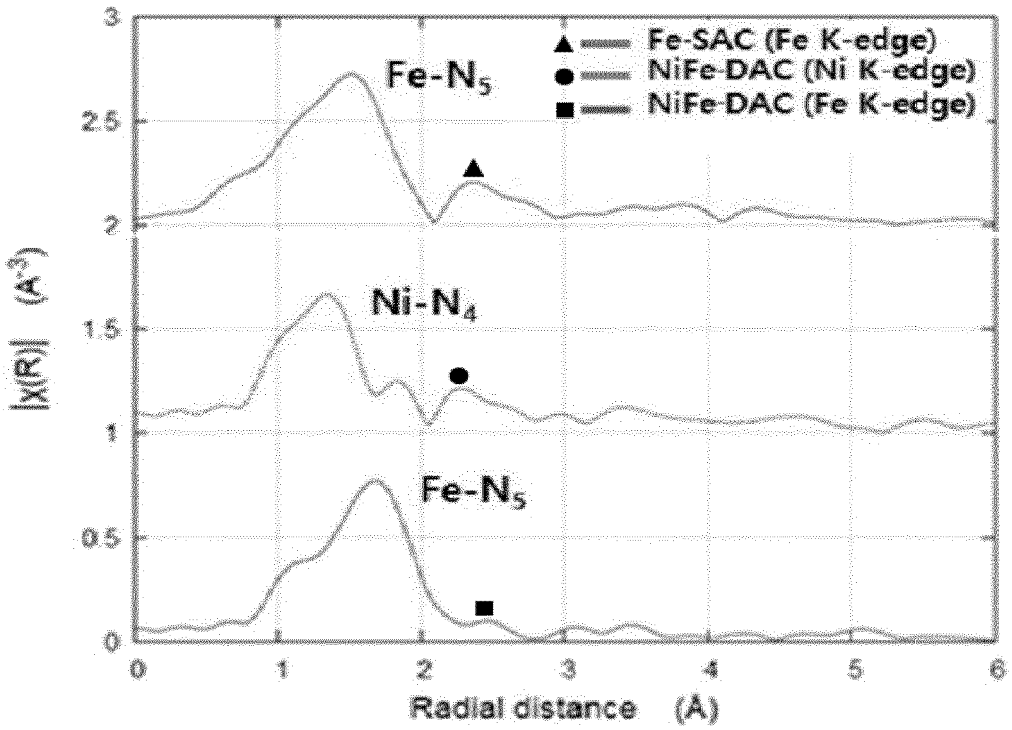
Fe-SAC (Fe K-edge)
NiFe-DAC (Ni K-edge)
NiFe-DAC (Fe K-edge)
Fe-N5
Ni-N4
Fe-N5
|χ(R)| (Å-3)
Radial distance (Å)
0
0.5
1
1.5
2
2.5
3
0
1
2
3
4
5
6

Fig. 5B

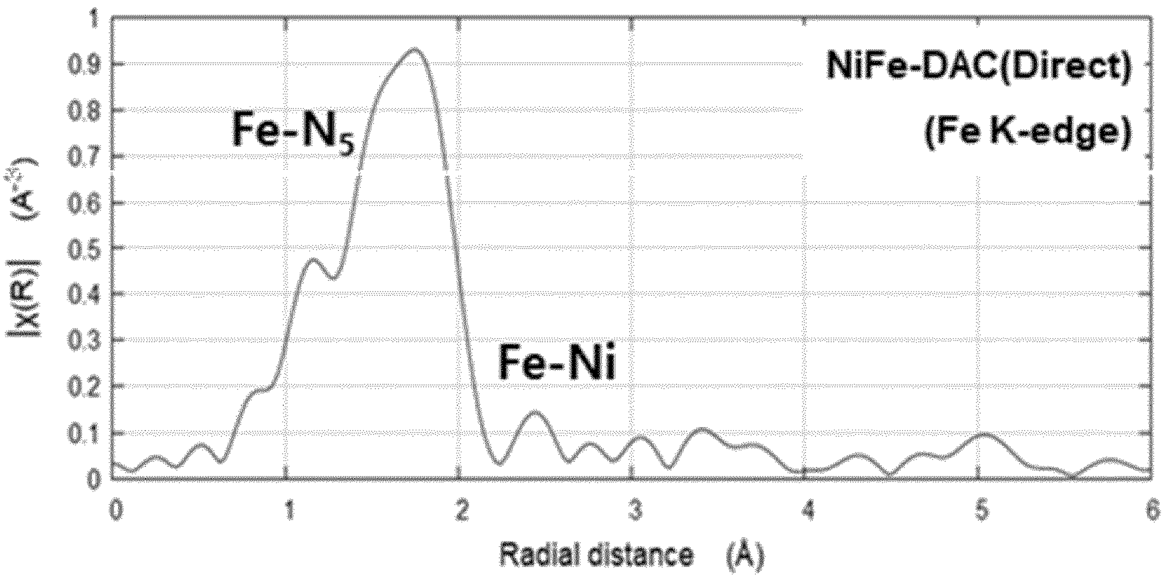
NiFe-DAC(Direct)
(Fe K-edge)
Fe-N5
Fe-Ni
|χ(R)| (Å-3)
Radial distance (Å)
0
0.1
0.2
0.3
0.4
0.5
0.6
0.7
0.8
0.9
1
0
1
2
3
4
5
6

Fig. 6

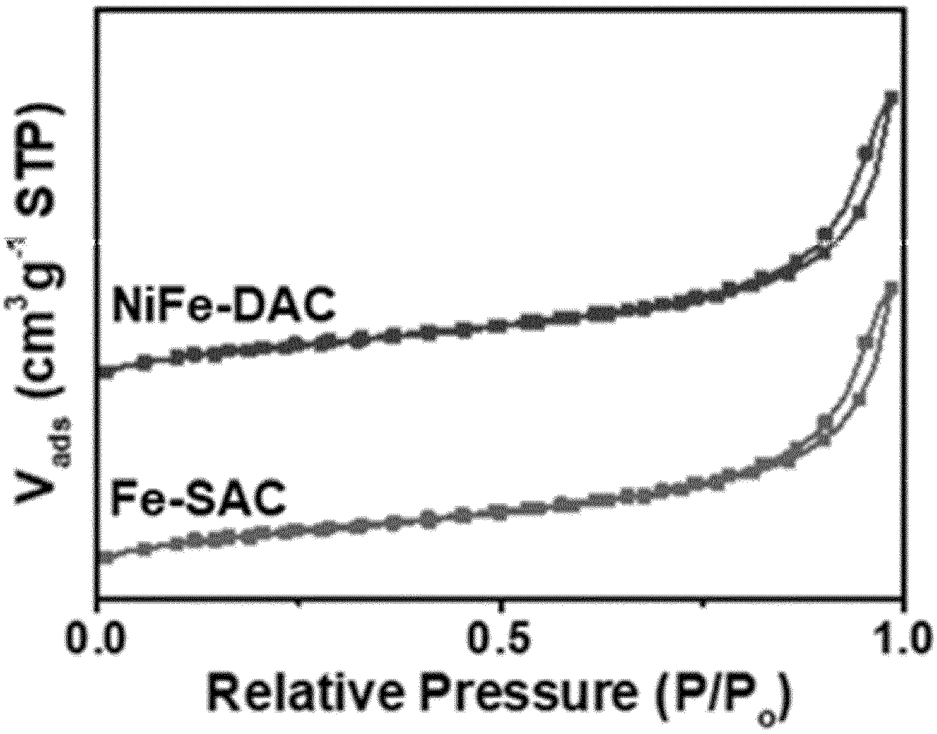

Fig. 7

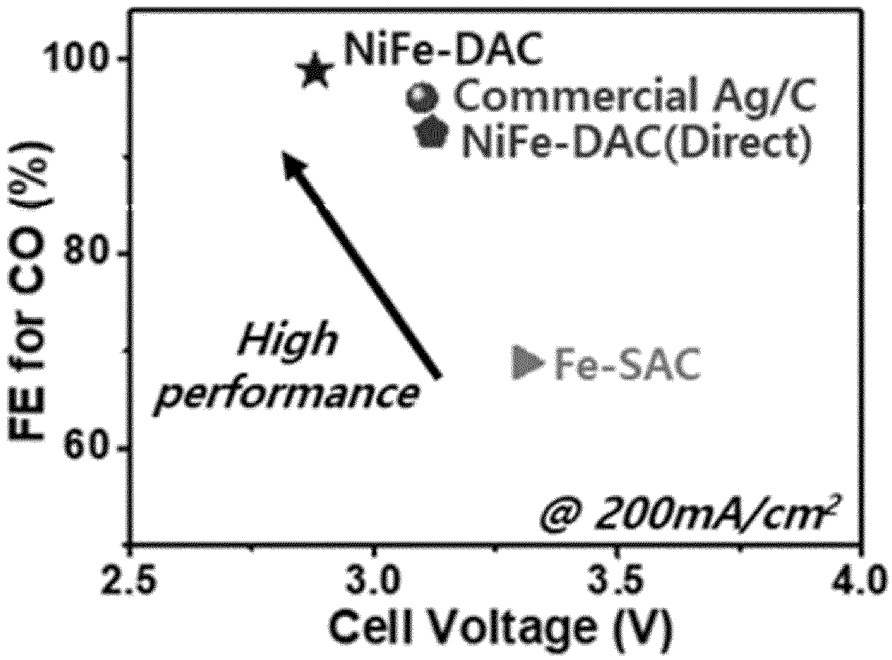
NiFe-DAC
Commercial Ag/C
NiFe-DAC(Direct)
High performance
Fe-SAC
@ 200mA/cm2
FE for CO (%)
100
80
60
2.5
3.0
3.5
4.0
Cell Voltage (V)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *J. Phys. Chem. C*, 2013, vol. 117, 9187-9195
- Angew. Chem. Int.. 2015, vol. 54, 10758-10762
- **LONG, J. et al.** *J. Am. Chem. Soc.*, 2021, vol. 143 (46), 19417-19424